# EUROPEAN PATENT APPLICATION

(11) **EP 2 154 306 A2**
(43) Date of publication of application: **17.02.2010**
(21) Application number: 09166686.7
(22) Date of filing: 29.07.2009
(51) Int. Cl.: E04C 2/04, C04B 28/00

(54) **Building panel**

(30) Priority: 16.08.2008 DE 102008038016
(71) Applicant: Knauf Insulation GmbH, 9586 Fürnitz (AT)
(72) Inventor: Königs, Stefan, 9586 Fürnitz (AT); Neuherz, Willibald, 9586 Fürnitz (AT)
(74) Representative: Farmer, Guy Dominic

(57) **Abstract**

A building panel comprising a structured layer (10) based on wood wool shavings in which
- the wood wool shavings of the structured layer are bonded together with a binding agent comprising a calcium sulphate hydrate, and
- a major surface of the building panel comprises a substantially continuous layer comprising a calcium sulphate hydrate which is bonded directly to the binding agent.

## Description

This invention relates to a building panel with a structured layer based on wood wool shavings.

Traditional wood wool lightweight building panels, which have been commercialised under the trade name Heraklith®, consist of wood wool shavings bonded together with a binding agent, a magnesite binding agent for example, with the formation of a porous structure with porosity of far greater than 50% by volume. The term wood wool shavings as used herein includes wood wool and/or wood shavings and/or wood fibres. The proportion of binding agent with respect to the entire wood wool lightweight building panel is usually between 20 and 30 % by weight.

The majority of the wood wool shavings used in the building panels of the present invention are preferably more than 8 cm long and/or 1 to 6 mm wide and/or 0.2 to 1.0 mm thick.

Traditional wood wool lightweight building panels have proven themselves for decades. One disadvantage for interior finishing, however, is that the surface cannot be sealed. This also applies to wood wool lightweight building panels that have a thin surface coating, which are offered for the interior finishing of buildings under the name Heraklith EPV.

In order to obtain an attractive surface for interior finishing, complex, reinforced mineral coatings must be applied. If a continuous (monolithic) covering layer is desired, then this is only possible by applying plaster to uncoated or pre-coated wood wool lightweight building panels.

In principle, it is possible to cover a wood wool lightweight building panel mounted on walls or ceilings with gypsum board and then to seal it. Such a process, however, is time consuming and expensive.

Accordingly, one aim of the invention is to provide a building panel with a structured layer based on wood wool shavings that makes it possible to have an attractive surface for interior finishing using simple measures.

The invention is based, at least in part, on the consideration that calcium sulphate hydrate, especially calcium sulphate hemihydrate and calcium sulphate dihydrate (gypsum) is extremely advantageous from an ecological perspective, as are wood wool shavings, and can be combined in ways not previously envisaged to meet this aim.

According to one aspect, the invention provides a building panel as defined in claim 1. Other aspects of the invention are defined in the other independent claims.

Where a major surface of the building panel comprises a substantially continuous layer comprising a calcium sulphate hydrate, this is preferably bonded directly to a binding agent which bonds the wood shavings of the structured layer, that is to say, there is no intervening layer or material which separates the binding agent and the substantially continuous layer comprising a calcium sulphate hydrate. This may be achieved by applying exposed calcium sulphate hydrate of the substantially continuous layer comprising a calcium sulphate hydrate directly to an exposed surface of the structured layer. This may result in the applied layer penetrating in to the structured layer and/or contacting exposed binder of the structured layer at the surface of the structured layer.

In a first embodiment, wood shavings are bonded with a binding agent based on calcium sulphate hydrate, whereby the wood wool shavings and calcium sulphate hydrate are combined to form a structured layer having an open porosity of greater than 50% by volume and the building panel is constructed with an independent, monolithic covering layer based on calcium sulphate hydrate on at least one main surface of the structured layer.

In contrast to conventional wood wool lightweight building panels which use a magnesite binder agent, calcium sulphate hydrate is used as a binding agent for the wood wool shavings of the structured layer of the present invention. The proportions of binding agent and wood wool shavings are arranged in this embodiment such that the structured layer has open porosity which approximates that of conventional wood wool lightweight building panels.

The monolithic covering layer is provided as an independent layer. This means that the monolithic covering layer is not merely formed from any calcium sulphate hydrate components which are superficially present at the surface of the structured layer, but it preferably consists substantially or essentially of calcium sulphate hydrate throughout its thickness, for example from having been applied separately. The covering layer provides a discrete, continuous or substantially continuous coating layer at a surface of the building panel; it may have a thickness which is at least 1, 1.5 or 2mm and/or no more than 5 or 8 mm.

In this way, characteristics of a conventional wood wool lightweight building panel may be combined with those of well-known gypsum board or plasterboard. The covering layer forms the exposed surface, which can be easily sealed after installation of the building panel in order to subsequently apply a coat of paint or wallpaper. If a layer of paper is applied on an exterior surface then it can be further processed like gypsum board. The structured layer serves as a backing, as it were, for the covering layer, but also provides the desirable properties of a wood wool lightweight building panel.

In an alternative, second embodiment, the building panel is constructed with a structured layer based on wood wool shavings that are bonded with a binding agent based on calcium sulphate hydrate, whereby the wood wool shavings and the calcium sulphate hydrate are matched in such a way that the structured layer has open porosity of less than 50% by volume.

In contrast to the first embodiment, a separate covering layer based on calcium sulphate hydrate is no longer essential because the proportion of calcium sulphate hydrate within the structured layer is greater than in the first embodiment i.e. the density of the building panel is greater than in the first embodiment and hence there is also the possibility of directly sealing the building panel, because the respective main surface of the structured layer is much "less open" than with a conventional wood wool lightweight building panel. At least at a major surface (or alternatively within a few millimetres,for example up to 1 or 3 or 5 mm, perpendicular to one or more surfaces) of the building panel, the open porosity may be considerably lower than 50% by volume with this construction, for example less than 25% by volume, less than 10% by volume or less than 5% by volume. This may also apply to the entire thickness of the structured layer.

In contrast, the structured layer in the first embodiment may have an open porosity that is considerably greater than 50% by volume, for example greater than 70% by volume, greater than 80% by volume or greater than 85% by volume.

A monolithic covering layer based on calcium sulphate hydrate may be applied to a building panel in accordance with the second embodiment.

The monolithic covering layer may contain fillers for example wood shavings as grains and/or as fibres. Such grains and/or fibres are preferably fine (for example, grain size <1 mm, fibre length < 10mm).

The independent covering layer made of calcium sulphate hydrate may be free of wood wool shavings; in any case, the proportion of wood wool shavings compared to the structured layer is considerably reduced in order to create a dense, sealed covering layer.

The structured layer may have a thickness which is at least 15 mm and/or not more than 100 mm perpendicular to the main surfaces. The covering layer may have a thickness which is at least 1 mm and/or not more than 7 mm or 5 mm perpendicular to the structured layer.

In order to facilitate use in wet or humid conditions, the layer(s) based on calcium sulphate hydrate may comprise a hydrophobic agent, for example one or more of a silane, siloxane, metal soap, and a soot.

Particularly for installation over large surface areas, the building panels may be provided at at least one edge with a bevel, a groove, or a tongue. If, for example, two adjoining edges have tongues, the two other edges may have grooves so that adjacent panels can be connected together almost joint-free.

If desired, a paper layer may be provided over at least one of the major surfaces of the covering layer (similar to the paper covering on standard gypsum boards). The layer containing calcium sulphate hydrate may be applied as a monolithic layer on the structured layer for example in a continuous or discontinuous process.

The dependent claims define preferred or alternative embodiments of the invention.

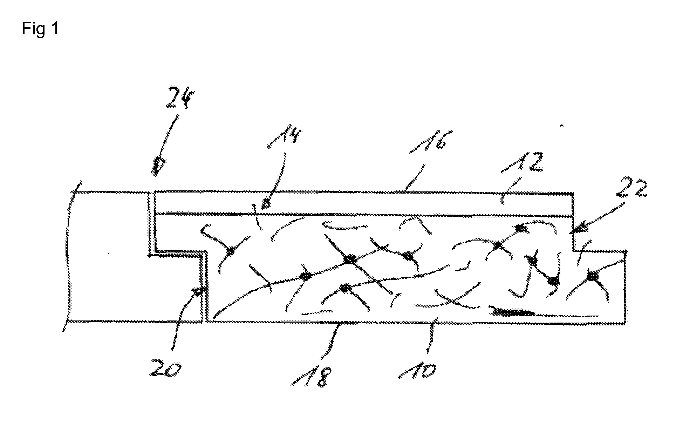

An embodiment of the invention is described in more detail below, by way of example, with reference to Fig 1 which is a schematic longitudinal cross section through a building panel.

The building panel of Fig 1 comprises a structured layer 10 based on wood wool shavings that are bonded with gypsum (calcium sulphate dihydrate), whereby some interconnecting points are characterised schematically by points. The structured layer 10 has open porosity of 83% by volume.

A monolithic covering layer 12 is provided at a major surface of the structured layer 10; this is formed by applying viscose gypsum paste (for example continuously on a strip forming machine) which bonds immediately with the adjacent wood wool fibres of the structured layer 10 such that after hardening of the covering layer 12, a secure bond results between the structured layer and the covering layer 12. Some individual wood wool shavings may penetrate into the covering layer 12 as illustrated by 14.

The completed building panel has an upper exposed surface 16 and a lower mounting surface 18.

Between these major surfaces 16, 18 are edges 20, 22 that are provided with steps such that the adjacent building panels can be placed together almost seamlessly as schematically illustrated on the left part of the figure.

Thanks to the gypsum covering layer 12, connections 24 between adjacent building panels and/or other unevenness or irregularities may be smoothed after installation of the building panels. The decorated walls or ceilings are then ready for painting or wallpapering.

The building panels provide good thermal insulating. Depending on the thickness and density of the layers, they may achieve a fire resistance time of 30 to 90 minutes for ceiling, wall and roof constructions (analogous to the standard EN 13501-2). The sound insulation of appropriately constructed partition walls, ceilings or roofs is considerably greater than conventional gypsum board.

## Claims

1. Building panel comprising a structured layer (10) based on wood wool shavings **characterised in that**
- the wood wool shavings of the structured layer are bonded together with a binding agent comprising a calcium sulphate hydrate, and
- a major surface of the building panel comprises a substantially continuous layer comprising a calcium sulphate hydrate which is bonded directly to the binding agent.

2. Building panel with a structured layer (10) based on wood wool shavings, which are bonded with a binding agent based on calcium sulphate hydrate, whereby the wood wool shavings and calcium sulphate hydrate are matched together in such a way that the structured layer (10) has open porosity of greater than 50% by volume, and with an independent monolithic covering layer (12) based on calcium sulphate hydrate on at least one of the main surfaces of the structures layer (10).

3. Building panel according to any preceding claim in which the structured layer (10) has an open porosity greater than 70% by volume.

4. Building panel according to any preceding claim in which the structured layer (10) has an open porosity greater than 85% by volume.

5. Building panel according to any preceding claim in which the covering layer (12) is free or substantially free of wood wool shavings.

6. Building panel according to any preceding claim in which the covering layer (12) is between 1 and 5 mm thick perpendicular to the structured layer (10).

7. Building panel with a structured layer (10) based on wood wool shavings, which are bonded with a binding agent based on calcium sulphate hydrate, whereby the wood wool shavings and the calcium sulphate hydrate are matched in such a way that the structured layer (10) has open porosity of less than 50% by volume.

8. Building panel according to claim 7 in which the structured layer (10) has an open porosity less than 25% by volume.

9. Building panel according to claim 7 in which the structured layer (10) has an open porosity less than 10% by volume.

10. Building panel according to any of claims 7 to 9, comprising a monolithic covering layer (12) based on calcium sulphate hydrate on at least one main surface of the structured layer (10).

11. Building panel according to any preceding claim in which the structured layer (10) is between 15 and 100 mm thick perpendicular to the main surfaces (16, 18) of the building panel.

12. Building panel according to any preceding claim in which the calcium sulphate hydrate component comprises calcium sulphate hemihydrate.

13. Building panel according to any preceding claim in which the calcium sulphate hydrate component comprises calcium sulphate dihydrate.

14. Building panel according to any preceding claim in which the calcium sulphate hydrate layer contains at least one hydrophobic agent.

15. Building panel according to any preceding claim comprising a covering made of paper provided at at least one of its major surfaces (16,18).
